# EUROPEAN PATENT SPECIFICATION

(11) **EP 2 782 726 B1**
(45) Date of publication and mention of the grant of the patent: **30.08.2017**
(21) Application number: 11791182.6
(22) Date of filing: 22.11.2011
(51) Int. Cl.: B27G 15/00, B23P 15/32, B23B 51/00, B23B 51/02

(54) **DRILL BIT**
BOHRER
FORET

(43) Date of publication of application: 01.10.2014
(73) Proprietor: Robert Bosch GmbH, 70442 Stuttgart (DE)
(72) Inventor: IBARRA, Javier, Schaumburg, IL 60193 (US); DOST, Hagen, Chicago, IL 60625 (US); MARKWALD, Jonathan, Elmhurst, IL 60126 (US); GONG, Michael, Elk Groove Village, IL 60007 (US)
(74) Representative: Isarpatent
(86) International application number: PCT/US2011/061849
(87) International publication number: WO 2013/077857

(56) References cited:
- WO-A2-2004/096471
- DE-A1-102011 007 694
- DE-U1- 29 707 504
- JP-A- 59 007 511
- US-A- 4 536 107
- US-A1- 2006 101 949
- US-A1- 2010 307 640

## Description

### BACKGROUND

The present disclosure relates to drill bits, such as the drill bit according to the preamble of claim 1. Such a drilling tool is disclosed in the document, JP59007511 A.

Conventional drill bits generally mimic the thread configuration of common wood screws and bolts. In particular, the drill bit thread has a relatively thin cross section, which allows for larger gaps between threads to grip as much substrate as possible between threads. Thus, the typical drill bit has a sharp thin thread that is highly susceptible to damage should the bit encounter an obstruction within the substrate. For instance, it is not uncommon in the construction industry, and particularly in the housing construction industry, to encounter nail remnants or metal particles when boring into wood. This encounter can severely damage the tip and threads of the drill bit so that over time the bit is useless.

Another problem is that the typical drill bit is subjected to bending loads. Some of the bending load is exerted by encounters with obstructions while other loads are created by flexing of the boring tool when the bit is boring into the substrate. The sharp thin threads of the conventional drill bit are not able to withstand excessive bending loads or the stress concentrations that arise when encountering such loads. Under normal bending loads, traditional drill bits will experience tip breakage, thread wear and tip bending, which ultimately will render the bit useless.

### SUMMARY

A drill bit for a boring tool comprises a shank configured for engagement with the boring tool and a threaded working tip having a first end attached to the shank and an opposite second end, and a helical thread extending substantially continuously from the first end to the second end. According to one feature, a first portion of the working tip is tapered at a first subtended angle and a second portion is tapered at a second subtended angle less than the first angle.

According to another feature, a drill bit comprising a shank and a threaded working tip includes a helical thread extending substantially continuously from the first end to the second end, the thread root having a rounded portion defined at a radius. The thread crest may be flat. A drill bit for a boring tool comprises a shank and a threaded working tip having a first end attached to the shank and an opposite second end, the working tip including a helical thread extending substantially continuously from the first end to the second end. In a further aspect, the thread has a width or thickness at the crest of the thread the magnitude of which may range from 0.01 mm to 1.0mm depending upon the length of the tip. According to another feature, the magnitude of the thread depth may range from 0.5mm to 1.55mm depending upon the tip length.

In another aspect, the drill bit has a width at the base of the thread between crests, with the cumulative base width along the bit equal to a percentage range of the total tip length, depending upon the tip length. Further, the drill bit may include a thread pitch of 12-14 tpi. In yet another aspect, the total cross sectional area of the tip when the threads are formed is within a predetermined percentage range of the area of the non-threaded cone, depending upon the tip length.

### DESCRIPTION OF THE FIGURES

**FIG. 1** is a side view of a drill bit as disclosed herein.
**FIG. 2** is an enlarged cross-sectional view of the thread of the drill bit shown in **FIG. 1**
**FIG. 3** is an enlarged view of an alternative thread root configuration for the drill bit of **FIG. 1****.**
**FIG. 4(a)****-(b)** are enlarged views of alternative thread crest configurations for the drill bit of **FIG. 1****.**
**FIG. 5(a)****-(e)** are enlarged views of alternative thread profiles for the drill bit of **FIG. 1****.**

### DETAILED DESCRIPTION

A drill bit **10** includes a continuous helical thread **12** extending from a first end **14** to a second end **16** of the bit body **11.** The second end **16** is attached to a shank **20** or other feature suitable for engagement by a boring tool. The body **11** includes a first chamfer portion **22** extending from the first end **14** toward the second end **16,** and a second portion **24** extending from the first portion to the second end **16.**

In accordance with one feature, the chamfer portion **22** subtends an angle **A1** originating at the first end **14** or the tip of the bit. Although the chamfer portion is not necessary for all embodiments, it is beneficial to reduce the thrust force required to penetrate the substrate while allowing the second portion 24 to have a larger cross section for greater bending strength. The second portion **24** subtends an angle **A2** that is less than the angle **A1.** In other words, the portion of the bit at the tip is at a more aggressive angle than the remainder of the bit. The second subtended angle **A2** may be about 30°. The magnitude of chamfer angle **A1** may be in the range of 30° to 120°.

The aggressive angle of the portion **22** of the bit **10** provides a sharp tip for starting the engagement of the thread **12** with the substrate. However, the sharp tip angle **A2** cannot be continued throughout the length of the threaded portion of the bit, otherwise the bit and resulting bore have an unusably large diameter. The smaller angle **A2** of the second portion **24** of the bit facilitates optimal load dissipation along the bit.

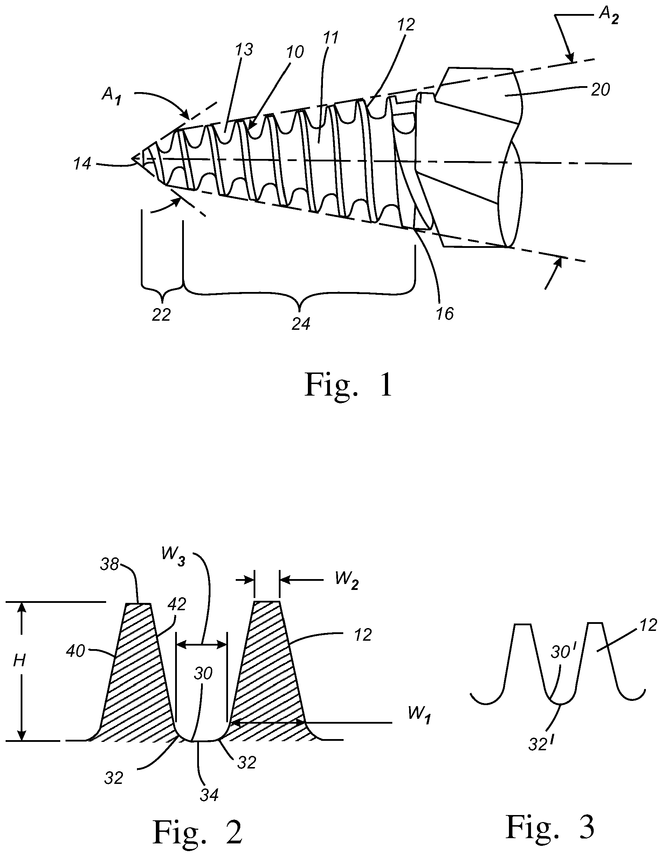

In the portion **24** the thread **12** has a height **H** from the root **30** to the crest **38 (****FIG. 2****).** As shown in **FIG. 1****,** the thread **12** has a constant height from the bit body **11** in the second portion **24** of the bit. The constant height ensures that the valley **13** formed by the thread is adequate to convey the material removed from the substrate as the bore is being created.

In another attribute, the thread **12** of the bit **10** is provided with a thicker, and therefore stiffer, crest in order to reduce bending, fatigue and wear of the thread. As depicted in **FIG. 2****,** the thread **12** has a base width **W1** at the root **30** and a crest width **W2** at the crest **38.** According to one aspect, the width **W2** or crest thickness falls within a predetermined range depending upon the length of the tip or portion **24.** For tip lengths between 7.0mm and 13.9mm the width **W2** falls within the range 0.01 mm to 0.4mm. For a tip length of 14.0mm to 17.9mm, the width **W2** is in the range 0.01 mm to 0.6mm. For larger tip lengths between 18mm and 30mm, the width **W2** ranges from 0.01 mm to 1.0mm. Thus, the thread **12** does not taper to a sharp edge as in prior drill bits, so the thread **12** disclosed herein has a much greater capacity to absorb impacts with nails and metal fragments embedded within a substrate being bored by the drill bit **10.**

According to this feature, the thread angle and thread depth also vary as a function of tip length. For the shorter tip lengths of 7.0mm to 17.9mm the thread angle ranges from 10° to 45°. For larger tip lengths, from 18.0mm to 30mm, the lower end of the thread angle range can be reduced to 5°, for a thread angle range of 5°to 45°. The thread depth is a minimum 0.5mm for all tip lengths, while the maximum thread depth varies with tip length. For instance, for tip lengths of: 7.0mm to 11.9mm, the maximum thread depth may be 1.25mm; 12.0mm to 13.9mm, depth 1.35mm; 14mm to 17.9mm, depth 1.5mm; 18mm to 21.9mm, depth 1.55mm; 22mm to 25.9mm, depth 1.6mm; and 26mm to 30mm, depth 1.8mm. The crest thickness, thread depth and thread angle relationships expressed above are believed to optimize thread wear resistance, gripping and tip stiffness.

The base width **W1** of the teeth bears a relationship to the tip length. In particular, the cumulative base width **W1** along the length of the tip is equal to about 50%-60% of the total tip length of the portion **24** for tip lengths ranging from 7.0mm to 17.9mm. Thus, if the tip length is 7.0mm, the cumulative base width **W1** may be in the range of 3.5mm to 4.2mm. For a tip length of 18mm to 21.9mm, the cumulative width **W1** may be 40% to 60% of the total tip length, for tip lengths of 22mm to 25.9mm, the range is 30% to 55%, while for the larger length of 26mm to 30mm the cumulative root width **W1** is 30% to 50% of the total tip length.

It can be appreciated that the root width **W3** is the difference between the total tip length and the cumulative base width **W1.** For example, for a tip length of 7.0m-11.9mm in which the cumulative base width is 50-60% of the total tip length, the cumulative root width **W3** is 40-50% of that length. Similarly, for the larger tip length of 26-30mm, the cumulative root width can be 50-70% of the total tip length because the cumulative base width is 30-50%.
that maintaining a certain cross-sectional area relationship for the drill bit provides an optimum trade-off between bending strength and gripping capability. Thus, in one aspect, a predetermined ratio is maintained between the cross sectional area of the non-threaded cone (as represented by the lines identifying the angle **A2** in **FIG. 1**) relative to the cross-sectional area of the threaded tip, in which the predetermined ration varies according to tip length. Thus, for a tip length of 7.0mm to 17.9mm, the threaded tip has a cross-sectional area of 85%-95% of the cross-sectional area of the non-threaded cone. For a tip length of 18mm to 21.9mm, the relationship is 55% to 80%, while for the larger tip lengths of 22mm to 30mm the area relationship is 50% to 80%.

In another aspect, the drill bit **10** includes a root **30** having a rounded portion **32,** as shown in **FIGS. 2-3****.** In the embodiment shown in **FIG. 2****,** the rounded portion **32** is interrupted by a flat portion **34.** The flat portion **34** may have a width that is at least half the root width W3. In the exemplary embodiment shown in FIG. 3 which is not part of the invention, the rounded portion **32'** is continuous, forming the entire root **30'.** The rounded portions **32, 32'** are defined at a smooth radius between the root **30, 30'** and the thread **12.** The magnitude of the radius depends upon the thread angle and the base width **W3,** but will typically be about one-half the base width **W3.** For larger thread angles (around 45°) the rounder portion **32',** for instance, may be more shallow and therefore at a radius that is greater than one half the base width W3.The rounded portion reduces stress concentration points or stress risers at the base of the thread that arise when the thread is subjected to bending loads upon encountering an obstruction during boring.

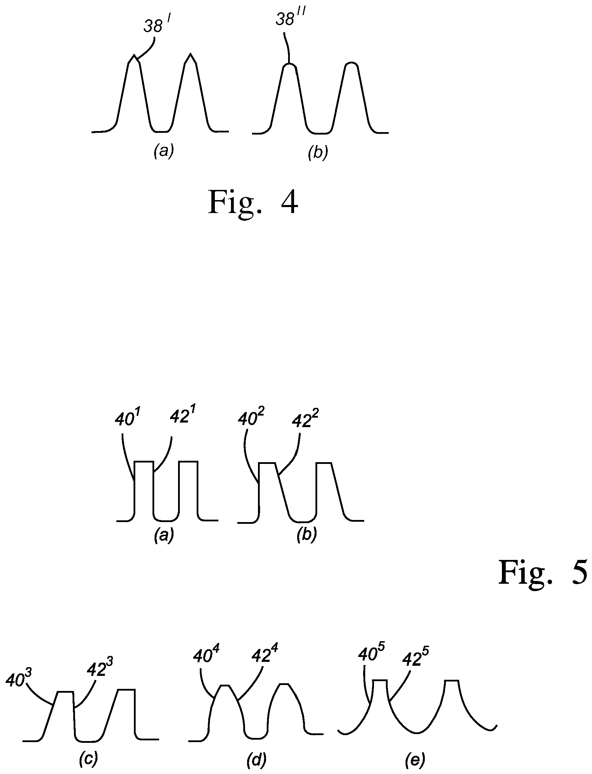

The features described above can be incorporated into various thread configurations, as illustrated in **FIGS. 4(a)-(b)** and **5(a)-(e)****.** In certain variations, the crest of the thread can be modified to form a "V" shape as shown in **FIG. 4(a)****,** or can be rounded as shown in **FIG. 4(b)****.** In both variations, the width of the thread at the crest is not compromised.

The present features can accommodate various thread profiles as shown in **FIGS. 2** and **5(a)-(e)****.** As shown in **FIG. 2****,** the leading flank **40** and trailing flank **42** of the thread **12** mutually converge from the root **30.** Alternatively, the leading and trailing flanks **40¹, 42¹** are substantially parallel **(****FIG. 5(a)****);** one of the trailing flank **42²** and the leading flank **40³** is angled toward the other face **40², 42³ (****FIG. 5(b), (c)****);** the leading and trailing flanks **40⁴, 42⁴** are convexly curved **(****FIG. 5(d)****);** or the leading and trailing flanks **40⁵, 42⁵** are concavely curved **(****FIG. 5(e)),** Fig.5(e) being an exemplary embodiment that is not part of the invention. Again, in each of these variations the width of the thread at the crest is not compromised.

In accordance with the present disclosure, a method is provided for designing a drill bit that is configured to avoid damage when drilling through a substrate and encountering an object within the substrate. More particularly, the method relates to determining a thread design as a function of the length of the threaded working tip of the drill bit configured to reduce bending and thread wear and optimize drilling and material removal efficiency. Thus, as described above, the helical threads of the threaded working tip are provided with a pitch of 14 tpi and a crest having a width of at least 0.01 mm and a maximum width of 0.4mm for a tip length of less than 14.0mm, a maximum width of 0.6mm for a tip length
the helical threads of the threaded working tip are provided with a pitch of 14 tpi and a crest having a width of at least 0.01 mm and a maximum width of 0.4mm for a tip length of less than 14.0mm, a maximum width of 0.6mm for a tip length of between 14.0mm and 17.9mm, and a maximum width of 1.0mm for a tip length of greater than 17.9mm.

In another aspect of the method, the helical threads have a thread depth of greater than about 0.5mm to a maximum of 1.25mm for a tip length of less than 11.0mm, a maximum of 1.35mm for a tip length of between 11.0 and 13.9mm, a maximum of 1.5mm for a tip length of between 14.0 and 17.9mm, maximum of 1.55mm for a tip length of between 18.0 and 21.9mm, a maximum of 1.6mm for a tip length of between 22.0 and 25.9mm, and a maximum of 1.8mm for a tip length of greater than 25.9mm.

The method further entails providing the helical thread with a thread angle of 10°-45°for tip lengths of less than 18.0mm and an angle of 5°-45°for tip lengths of 18.0mm and greater. In another step in the drill bit design, the threaded portion is conical and the cross sectional area of the body of the threaded portion is 60%-85% of the cross sectional area of the unthreaded subtended conical angle of the threaded portion for tip lengths of less than 18.0mm, 55%-80% for tip lengths of 18.0mm to 21.9mm and 50%-80% for tip lengths greater than 21.9mm. The threaded working tip of the drill bit is further designed so that the cumulative width of the base of the helical thread is 50%-60% of the tip length for tip lengths of less than 18.0mm, 40%-60% for tip lengths between 18.0mm and 21.9mm, 30%-55% for tip lengths between 22.0mm and 25.9mm and 30%-50% for tip lengths greater than 25.9mm. In accordance with the present method, the thread configuration of the drill bit is configured according to the above relationships with respect to the length of the threaded working tip.
said helical thread having a thread angle of 10°-45° for tip lengths of less than 18.0mm and an angle of 5°-45° for tip lengths of 18.0mm and greater.

Embodiment 25. The drill bit of embodiment 24, wherein said helical thread is conical and the cross sectional area of the body of the threaded portion is 60%-85% of the cross sectional area of the unthreaded subtended conical angle of the threaded portion for tip lengths of less than 18.0mm, 55%-80% for tip lengths of 18.0mm to 21.9mm and 50%-80% for tip lengths greater than 21.9mm.

Embodiment 26. The drill bit of embodiment 25, wherein said helical thread has a base opposite said crest, the cumulative width of the base of the helical thread being 50%-60% of the tip length for tip lengths of less than 18.0mm, 40%-60% for tip lengths between 18.0mm and 21.9mm, 30%-55% for tip lengths between 22.0mm and 25.9mm and 30%-50% for tip lengths greater than 25.9mm.

Embodiment 27. The drill bit of embodiment 25, wherein said helical thread has a pitch of 12-14tpi.

Embodiment 28. A drill bit for a boring tool comprising:
a shank configured for engagement with the boring tool; and
a threaded working tip having a first end attached to said shank and an opposite second end, said working tip including a helical thread extending substantially continuously from said first end to said second end, said helical thread having a flat crest and a root including a rounded portion defined at a radius.

Embodiment 29. The drill bit of embodiment 28, wherein said rounded portion of said root is interrupted by a flat portion interposed in said rounded portion.

Embodiment 30. The drill bit of embodiment 28, wherein said crest has a width of between a minimum width of 0.01 mm and maximum width of at least 0.4mm.

Embodiment 31. The drill bit of embodiment 30, wherein said maximum width is a function of the length of said threaded working tip.

## Claims

1. A drill bit (10) for a boring tool comprising:
a shank (20) configured for engagement with the boring tool; and
a threaded working tip having a first end (16) attached to said shank (20) and an opposite second end (14), said working tip including a helical thread (12) extending continuously from said first end (16) to said second end (14), said helical thread (12) having a root (30) including a rounded portion (32) defined at a radius,
wherein a flat portion (34) is interposed between adjacent rounded portions (32) of said root (30).

2. The drill bit of claim 1, wherein said root (30) has a width (W1) and said radius is equal to at least one half said width (W1).

3. The drill bit of claim 1, wherein said helical thread (12) has a pitch of between 12 and 14 tpi.

4. The drill bit of claim 1 said helical thread (12) has a crest having a width (W2) of between a minimum width of 0.01 mm and maximum width of 1 mm.

5. The drill bit of claim 4, wherein said maximum width (W2) is a function of the length of said threaded working tip.

6. The drill bit of claim 5, wherein said maximum width is 0.4mm for a length of said threaded working tip of less than 14.0mm.

7. The drill bit of claim 5, wherein said maximum width is 0.6mm for a length of said threaded working tip of between 14.0 mm and 17.9 mm.

8. The drill bit of claim 5, wherein said maximum width is 1.0 mm for a length of said threaded working tip of greater than 17.9 mm.

9. The drill bit of claim 1 said helical thread (12) has a thread depth of between a minimum depth of 0.5 mm and maximum depth of 1.8 mm.

10. The drill bit of claim 9, wherein maximum depth is a function of the length of said threaded working tip.

11. The drill bit of claim 10, wherein said maximum depth is 1.35 mm for a length of said threaded working tip of between 11.0 mm and 13.9 mm.

12. The drill bit of claim 10, wherein said maximum depth is 1.5 mm for a length of said threaded working tip of between 14.0 mm and 17.9 mm.

13. The drill bit of claim 10, wherein said maximum depth is 1.55 mm for a length of said threaded working tip of between 18.0 mm and 21.9 mm.

14. The drill bit of claim 1, wherein said helical thread (12) has a leading flank (40) and an opposite trailing flank (42) and a cross-section defined by said leading and trailing flanks (40, 42) selected from one of the following configurations: the leading and trailing flanks (40, 42) mutually converge; one of the leading flank (40) and the trailing flank (42) is angled toward the other face; the leading and trailing flanks (40, 42) are substantially parallel; and the leading and trailing flanks (40, 42) are convexly curved.

15. The drill bit of claim 1, wherein said threaded working tip includes a threaded chamfer portion (24) at said second end (14), said chamfer portion (24) subtending an angle (A2) of between about 30 ° and 120 °.

## Patentansprüche

1. Bohreinsatz (10) für ein Bohrwerkzeug, umfassend:
einen Schaft (20), der zum Eingriff mit dem Bohrwerkzeug ausgebildet ist; und
eine gewindeförmige Arbeitsspitze mit einem ersten Ende (16), das an den Schaft (20) angebracht ist, und einem gegenüberliegenden zweiten Ende (14), wobei die Arbeitsspitze ein spiralförmiges Gewinde (12) aufweist, das sich kontinuierlich von dem ersten Ende (16) zu dem zweiten Ende (14) erstreckt, **dadurch gekennzeichnet, dass** das spiralförmige Gewinde (12)
eine Wurzel (30) hat, die einen gerundeten Abschnitt (32) aufweist, der in einem Radius definiert ist, wobei ein flacher Abschnitt (34) zwischen benachbarten gerundeten Abschnitten (32) der Wurzel (30) zwischengeordnet ist.

2. Bohreinsatz nach Anspruch 1, wobei die Wurzel (30) eine Breite (W1) hat und der Radius mindestens gleich einer Hälfte der Breite (W1) ist.

3. Bohreinsatz nach Anspruch 1, wobei das spiralförmige Gewinde (12) eine Steigung von zwischen 12 und 14 Gewindegängen pro Zoll hat.

4. Bohreinsatz nach Anspruch 1, wobei das spiralförmige Gewinde (12) einen Scheitel mit einer Breite (W2) hat, die zwischen einer minimalen Breite von 0,01 mm und einer maximalen Breite von 1 mm liegt.

5. Bohreinsatz nach Anspruch 4, wobei die maximale Breite (W2) eine Funktion der Länge der gewindeförmigen Arbeitsspitze ist.

6. Bohreinsatz nach Anspruch 5, wobei für eine Länge der gewindeförmigen Arbeitsspitze von weniger als 14,0 mm die maximale Breite 0,4 mm ist.

7. Bohreinsatz nach Anspruch 5, wobei für eine Länge der gewindeförmigen Arbeitsspitze, die zwischen 14,0 mm und 17,9 mm liegt, die maximale Breite 0,6 mm ist.

8. Bohreinsatz nach Anspruch 5, wobei für eine Länge der gewindeförmigen Arbeitsspitze von mehr als 17,9 mm die maximale Breite 1,0 mm ist.

9. Bohreinsatz nach Anspruch 1, wobei das spiralförmige Gewinde (12) eine Gewindetiefe hat, die zwischen einer minimalen Tiefe von 0,5 mm und einer maximalen Tiefe von 1,8 mm liegt.

10. Bohreinsatz nach Anspruch 9, wobei die maximale Tiefe eine Funktion der Länge der gewindeförmigen Arbeitsspitze ist.

11. Bohreinsatz nach Anspruch 10, wobei für eine Länge der gewindeförmigen Arbeitsspitze, die zwischen 11,0 mm und 13,9 mm liegt, die maximale Tiefe 1,35 mm ist.

12. Bohreinsatz nach Anspruch 10, wobei für eine Länge der gewindeförmigen Arbeitsspitze, die zwischen 14,0 mm und 17,9 mm liegt, die maximale Tiefe 1,5 mm ist.

13. Bohreinsatz nach Anspruch 10, wobei für eine Länge der gewindeförmigen Arbeitsspitze, die zwischen 18,0 mm und 21,9 mm liegt, die maximale Tiefe 1,55 mm ist.

14. Bohreinsatz nach Anspruch 1, wobei das spiralförmige Gewinde (12) eine Vorlaufflanke (40), eine gegenüberliegende Nachlaufflanke (42) und einen Querschnitt hat, der durch Vorlauf- und Nachlaufflanken (40, 42) definiert ist, die aus einer der folgenden Konfigurationen ausgewählt sind: die Vorlauf- und Nachlaufflanken (40, 42) laufen aufeinander zu; eine Vorlaufflanke (40) oder eine Nachlaufflanke (42) ist zur anderen Fläche gewinkelt; die Vorlauf- und Nachlaufflanken (40, 42) sind im Wesentlichen parallel; und die Vorlauf- und Nachlaufflanken (40, 42) sind konvex gekrümmt.

15. Bohreinsatz nach Anspruch 1, wobei die gewindeförmige Arbeitsspitze einen gewindeförmigen Abschrägungsabschnitt (24) an dem zweiten Ende (14) aufweist, wobei der Abschrägungsabschnitt (24) einem Winkel (A2) zwischen 30° und 120° entspricht.

## Revendications

1. Foret (10) destiné à un outil de perçage, comprenant :
une queue (20) conçue pour entrer en prise avec l'outil de perçage ; et
une pointe de travail filetée présentant une première extrémité (16) fixée à ladite queue (20) et une seconde extrémité opposée (14), ladite pointe de travail comportant un filetage hélicoïdal (12) s'étendant en continu de ladite première extrémité (16) à ladite seconde extrémité (14), **caractérisé en ce que** :
ledit filetage hélicoïdal (12) a un fond (30) comportant une partie arrondie (32) définie selon un rayon, dans lequel une partie plate (34) est intercalée entre des parties arrondies voisines (32) dudit fond (30).

2. Foret selon la revendication 1, dans lequel ledit fond (30) présente une largeur (W1) et ledit rayon est égal au moins à la moitié de ladite largeur (W1).

3. Foret selon la revendication 1, dans lequel ledit filetage hélicoïdal (12) présente un pas compris entre 12 et 14 filets au pouce.

4. Foret selon la revendication 1, dans lequel ledit filetage hélicoïdal (12) a une crête présentant une largeur (W2) comprise entre une largeur minimum de 0,01 mm et une largeur maximum de 1 mm.

5. Foret selon la revendication 4, dans lequel ladite largeur maximum (W2) est fonction de la longueur de ladite pointe de travail filetée.

6. Foret selon la revendication 5, dans lequel ladite largeur maximum est égale à 0,4 mm pour une longueur de ladite pointe de travail filetée inférieure à 14,0 mm.

7. Foret selon la revendication 5, dans lequel ladite largeur maximum est égale à 0,6 mm pour une longueur de ladite pointe de travail filetée comprise entre 14,0 mm et 17,9 mm.

8. Foret selon la revendication 5, dans lequel ladite largeur maximum est égale à 1,0 mm pour une longueur de ladite pointe de travail filetée supérieure à 17,9 mm.

9. Foret selon la revendication 1, dans lequel ledit filetage hélicoïdal (12) a une profondeur de filetage comprise entre une profondeur minimum de 0,5 mm et une profondeur maximum de 1,8 mm.

10. Foret selon la revendication 9, dans lequel la profondeur maximum est fonction de la longueur de ladite pointe de travail filetée.

11. Foret selon la revendication 10, dans lequel ladite profondeur maximum est égale à 1,35 mm pour une longueur de ladite pointe de travail filetée comprise entre 11,0 mm et 13,9 mm.

12. Foret selon la revendication 10, dans lequel ladite profondeur maximum est égale à 1,5 mm pour une longueur de ladite pointe de travail filetée comprise entre 14,0 mm et 17,9 mm.

13. Foret selon la revendication 10, dans lequel ladite profondeur maximum est égale à 1,55 mm pour une longueur de ladite pointe de travail filetée comprise entre 18,0 mm et 21,9 mm.

14. Foret selon la revendication 1, dans lequel ledit filetage hélicoïdal (12) présente un flanc avant (40) et un flanc arrière opposé (42) ainsi qu'une section transversale définie par lesdits flancs avant et arrière (40, 42) choisis parmi l'une des configurations suivantes : les flancs avant et arrière (40, 42) convergent l'un vers l'autre ; l'un du flanc avant (40) ou du flanc arrière (42) est incliné vers l'autre face ; les flancs avant et arrière (40, 42) sont sensiblement parallèles ; et les flancs avant et arrière (40, 42) ont une courbure convexe.

15. Foret selon la revendication 1, dans lequel ladite pointe de travail filetée comporte une partie chanfreinée filetée (24) à ladite seconde extrémité (14), ladite partie chanfreinée (24) sous-tendant un angle (A2) compris entre environ 30° et 120°.
